# EUROPÄISCHE PATENTSCHRIFT

(11) **EP 2 051 828 B1**
(45) Veröffentlichungstag und Bekanntmachung des Hinweises auf die Patenterteilung: **13.01.2010**
(21) Anmeldenummer: 07787985.6
(22) Anmeldetag: 27.07.2007
(51) Int. Cl.: B23D 79/00

(54) **VORRICHTUNG ZUM THERMISCHEN ENTGRATEN VON WERKSTÜCKEN**
DEVICE FOR THE THERMAL DEBURRING OF WORKPIECES
DISPOSITIF D'ÉBARBAGE THERMIQUE DE PIÈCES A USINER

(30) Priorität: 15.08.2006 DE 102006038309
(43) Veröffentlichungstag der Anmeldung: 29.04.2009
(73) Patentinhaber: Extrude Hone Gmbh, 42859 Remscheid (DE)
(72) Erfinder: MATT, Patrick, 87616 Marktoberdorf (DE)
(74) Vertreter: Rössler, Matthias
(86) Internationale Anmeldenummer: PCT/EP2007/057770
(87) Internationale Veröffentlichungsnummer: WO 2008/019934

(56) Entgegenhaltungen:
- EP-A- 1 232 822
- JP-A- 5 293 328
- US-A- 4 796 867
- US-A1- 2003 200 867

## Beschreibung

Die vorliegende Erfindung betrifft eine Vorrichtung zum thermischen Entgraten von Werkstücken, die wenigstens eine Entgratungskammer und eine Zuführeinrichtung zum Einleiten eines Brenngasgemischs in die Entgratungskammer umfasst, d.h. eine Vorrichtung gemäß dem Oberbegriff des Anspruchs 1, sowie ein Verfahren zum entfernen eines explosiven Brenngasmischung gemäß dem Oberbegriff des Anspruchs 7. Eine solche Vorrichtung bzw. ein solches Verfahren ist beispielweise aus EP 1 232 822 A1 bekannt.

Bei Anlagen zum thermischen Entgraten von Werkstücken erfolgt ein ungezielter Abtrag, bei dem das gesamte Werkstück einem Hitzeschock ausgesetzt wird. Bevorzugt abgetragen werden Ecken und Kanten, da diese Stellen bei großer Oberfläche und kleinem Volumen besonders viel Wärme aufnehmen und somit oxidiert bzw. verbrannt werden. Der Hitzeschock wird durch das Abbrennen eines Brenngasgemisches erreicht, das vorzugsweise ein Brenngas, wie z. B. Wasserstoff, Erdgas oder Methan, und ein Oxidationsgas, wie insbesondere Sauerstoff, umfasst.

Zur Durchführung dieses Verfahrens wird mindestens ein Werkstück in die Entgratungskammer eingeführt, beispielsweise mit einem so genannten Schließteller, so dass ein abgeschlossener Brennraum mit der Entgratungskammer gebildet ist. In diese verschlossene Entgratungskammer wird dann das Brenngasgemisch eingebracht. Das Brenngasgemisch kann so zugeführt werden, dass die einzelnen Gasbestandteile separat in die Entgratungskammer eingeführt werden, eine gemischte Zufuhr der Brenngasbestandteile zumindest in einem letzten Teilabschnitt des Zuführprozesses ist dabei bevorzugt. Hierbei können je nach Größe der Entgratungskammer bzw. der Anzahl der Werkstücke sehr hohe Überdrücke realisiert werden, beispielsweise bis 50 bar.

Durch entsprechende Zündmittel, beispielsweise einer Zündkerze, die im Bereich des Brennraums oder aber auch in einem Zuführkanal hin zur Entgratungskammer installiert sein können, wird dann das Brenngasgemisch gezündet, so dass der eingangs beschriebene Hitzeschock generiert wird.

Nach der Durchführung dieses thermischen Entgratungsverfahrens und insbesondere bei Störfällen, wenn z. B. keine Zündung erfolgt ist, muss das mit Überdruck in der Brennkammer befindliche Gasvolumen wieder abgelassen werden. Dazu war es zunächst üblich, einfach die Entgratungskammer zu öffnen, also beispielsweise den Schließteller von der Entgratungskammer zu entfernen. Allerdings hat sich bei diesem Verfahren herausgestellt, dass es zu einer sehr starken Verschmutzung im gesamten Bereiches zwischen Schließteller und Entgratungskammer kommen konnte, die gegebenenfalls auch einen abrasiven Verschleiß der zwischen der Entgratungskammer und dem Schließteller vorgesehenen Dichtung zur Folge haben kann.

Eine Weiterentwicklung wird in der EP 1 232 822 A1 beschrieben. Dort wird vorgeschlagen, dass der Entgratungskammer ein so genanntes Schnellentlüftungsventil zugeordnet ist, über das das in der Entgratungskammer vorhandene Gas abströmen kann. Auf diese Weise wird beispielsweise auch die Möglichkeit geschaffen, die Entgratungsoxide und -rückstände über einen Filter zu reinigen.

Allerdings muss berücksichtigt werden, dass in den Fällen, wenn im Brennraum noch ein zündfähiges bzw. explosionsfähiges Brenngasgemisch vorliegt, ein schnelles Ausströmen über ein solches Schnellentlüftungsventil unter Umständen gefährlich sein kann. Dabei ist insbesondere zu beachten, dass bei einigen zündfähigen Brenngasgemischen bereits eine geringe Energiezufuhr ausreicht, um gegebenenfalls eine Zündung auszulösen. Aus diesem Grund wird bei solchen Schnellentlüftungsventilen regelmäßig das Ablassen so verwirklicht, dass die Strömungsgeschwindigkeiten durch das Zentralventil sehr gering gehalten werden, um eine Entzündung des Brenngasgemischs infolge von beispielsweise Gasreibung zu vermeiden. Berücksichtigt man nun den Umstand, dass solche Schnellentlüftungsventile mit sehr kleinem Durchmesser bereitgestellt werden, hat das langsame Ablassen des explosiven Brenngasgemischs aus der Entgratungskammer, insbesondere wenn diese ein großes Volumen hat, lange Stillstandzeiten der Anlage zur Folge.

Hiervon ausgehend ist es Aufgabe der vorliegenden Erfindung, die mit Bezug auf den Stand der Technik geschilderten Probleme zumindest teilweise zu lösen. Insbesondere sollen eine Vorrichtung und ein Verfahren angegeben werden, die kurze Entlüftungszeiten ermöglichen und dabei die Gefahr der Selbstentzündung ausschließen.

Diese Aufgaben werden gelöst mit einer Vorrichtung zum thermischen Entgraten gemäß den Merkmalen des Patentanspruchs 1 sowie einem Verfahren zum Entfernen eines explosiven Brenngasgemischs aus einer Vorrichtung zum thermischen Entgraten gemäß den Merkmalen des Patentanspruchs 7. Weitere vorteilhafte Ausgestaltungen der Erfindung sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Darüber hinaus werden die Merkmale in der Beschreibung weiter spezifiziert und erläutert, so dass sich auch hieraus bevorzugte Weiterbildungen der Erfindung ergeben.

Die erfindungsgemäße Vorrichtung zum thermischen Entgraten von Werkstücken umfasst wenigstens eine Entgratungskammer und eine Zuführeinrichtung zum Einleiten eines Brenngasgemisches in die Entgratungskammer, wobei für wenigstens die Entgratungskammer oder die Zuführeinrichtung eine Zusatzgaszufuhr vorgesehen ist, so dass das zumindest in der Entgratungskammer oder der Zuführeinrichtung befindliche Brenngasgemisch mit Zusatzgas wenigstens teilweise mischbar und zumindest teilweise inertisierbar ist.

Die Vorrichtung umfasst bevorzugt genau eine Entgratungskammer und eine entsprechende Zuführeinrichtung; die Zuführeinrichtung kann gleichwohl aber auch für mehrere, insbesondere unterschiedlich große, Entgratungskammem vorgesehen sein. Eine solche Zuführeinrichtung umfasst regelmäßig aufgrund der darin herrschenden hohen Drücke massive Bauteile, in die Bohrungen eingebracht sind, durch welche Teile des Brenngasgemischs oder das gesamte Brenngasgemisch hindurch hin zur Entgratungskammer gefördert werden. Regelmäßig sind die Zuführeinrichtung und die Entgratungskammer miteinander so verbunden, dass insbesondere ein ineinander übergehender Zuführkanal ausgebildet ist. Teile der Zuführeinrichtung sind dabei insbesondere Druckerzeuger, wie beispielsweise Förderpumpen, Hubzylinder oder Ähnliches, Mischräume, Vorratsbehälter und dergleichen.

Hier wird nun eine Zusatzgaszufuhr vorgeschlagen, die zwar grundsätzlich auch an mehreren Stellen vorgesehen sein kann, wobei hier jedoch eine Bereitstellung der Zusatzgaszufuhr an der Entgratungskammer direkt oder einer Komponente der Zuführeinrichtung bevorzugt ist. Unter Zusatzgas im Sinne der vorliegenden Erfindung wird jeder bei der Zufuhr gasförmige Stoff verstanden, dessen Zumischung zu einem zündfähigen Gasgemisch die Gefahr einer ungewollten Zündung verringert. In diesem Sinne ist auch beispielsweise Wasserdampf ein Zusatzgas. Zusätzliche Maßnahmen, wie beispielsweise Kühlung, Beseitigung möglicher Zündquellen etc. können die Wirkung des Zusatzgases unterstützen. Dabei ist die Zusatzgaszufuhr so positioniert bzw. gestaltet, dass damit ein Zusatzgas dem Brenngasgemisch zugeführt werden kann, wobei insbesondere ein Einströmen des Zusatzgases in den Teilbereich der Vorrichtung ermöglicht ist, in dem sich das Brenngasgemisch zum Zeitpunkt der Zündung üblicherweise befindet. Diese Zusatzgaszufuhr umfasst in der Regel zumindest einen Leitungsabschnitt, der beispielsweise in einen Zuführkanal der Zuführeinrichtung oder den Brennraum bzw. einem Zentralventil zur Schnellentlüftung der Entgratungskammer mündet.

Durch die Zufuhr eines Zusatzgases wird erreicht, dass die explosive Atmosphäre des zündfähigen Brenngasgemisches beseitigt wird. Eine Explosion beruht auf dem gleichzeitigen Vorhandensein von Zündquelle und explosiver Atmosphäre. Um eine Explosion wirkungsvoll verhindern zu können, müssen daher alle Zündquellen ausgeschlossen werden und/oder die explosionsfähige Atmosphäre beseitigt werden. Da man im Allgemeinen nicht alle Zündquellen sicher beseitigen kann, muss die Zusammensetzung des Brenngasgemischs so weit mit einem Zusatzgas beeinflusst werden, dass das Gemisch außerhalb der Explosionsgrenzen gelangt und auch beim Ausströmen in die Umgebungsatmosphäre, wobei Sauerstoffüberschuss entsteht, sich nicht mehr entzünden kann.

Das bedeutet mit anderen Worten, dass die Zusammensetzung des Brenngasgemischs so weit mit einem Zusatzgas beeinflusst wird, dass z.B. die Selbstentzündungsneigung des Brenngasgemischs signifikant abnimmt. Dabei kann grundsätzlich ein Teilvolumen des Brenngasgemischs mit Zusatzgas versetzt werden, beispielsweise das lokal im Bereich des Schnellentlüftungsventil befindliche bzw. vorbeiströmende Brenngasvolumen, es ist jedoch auch möglich, eine entsprechende Inertisierung des gesamten Brenngasgemischvolumens zu bewirken. Die Inertisierung führt nun dazu, dass einerseits der Überdruck in der Entgratungskammer gegebenenfalls erhöht wird und andererseits, dass größere Strömungsgeschwindigkeiten beim Ablassen des Gasstromes aus Brenngasgemisch und Zusatzgas realisiert werden können. Dies führt insgesamt zu einer deutlichen Reduzierung der Stillstandzeit der Vorrichtung.

Einer bevorzugten Weiterbildung der Vorrichtung zufolge ist für wenigstens die Entgratungskammer oder die Zuführeinrichtung ein Zentralventil vorgesehen, über dass das Brenngasgemisch aus der Entgratungskammer oder der Zuführeinrichtung entfernt werden kann, wobei die Zusatzgaszufuhr in eine Ausströmrichtung des Brenngasgemischs gesehen vor dem Zentralventil angeordnet ist. Ganz besonders bevorzugt ist die Ausführungsvariante, bei der die Entgratungskammer eine Bohrung aufweist, an die sich das Zentralventil anschließt. Gerade bei einer solchen Ausgestaltung der Entgratungskammer wird bevorzugt, dass die Zusatzgaszufuhr in die Bohrung unmittelbar vor dem Zentralventil mündet. Das hat insbesondere den Vorteil, dass an dieser Stelle nur relativ kleine Brenngasgemischvolumina vorbeiströmen, die einfacher mit dem Zusatzgas inertisiert werden können. Auch wenn grundsätzlich eine entsprechende Anordnung zur Zuführeinrichtung möglich ist, so ist doch die Positionierung des Zentralventils direkt an der Entgratungskammer bevorzugt.

Darüber hinaus wird vorgeschlagen, dass für wenigstens die Entgratungskammer oder die Zuführeinrichtung ein Zentralventil vorgesehen ist, über dass das Brenngasgemisch aus der Entgratungskammer oder der Zuführeinrichtung entfernt werden kann, wobei das Zentralventil einen Strömungsquerschnitt hat, der größer als 2 mm² ist. Die hier vorgeschlagene Inertisierung des Brenngasgemisches führt nun dazu, dass das Brenngasgemisch deutlich schneller aus der Entgratungskammer abgelassen werden kann. Dieser Effekt kann weiter dadurch gesteigert werden, dass das Zentralventil einen großen Strömungsquerschnitt hat. Ganz besonders bevorzugt sind Strömungsquerschnitte im Bereich oberhalb von 10 mm², insbesondere sogar von mindestens 20 mm². Bei im Wesentlichen kreisrunden Strömungsquerschnitten sind Durchmesser von mindestens 2 mm bevorzugt, insbesondere von 4 mm. Generell sollten möglichst große Durchmesser, die nur von der Größe der vorhandenen Bauteile bestimmt werden, Anwendung finden, um möglichst kurze Entlüftungszeiten zu verwirklichen.

Einer Weiterbildung der Vorrichtung zufolge weist die Zuführeinrichtung einen Mischblock auf mit einem zentralen Zuführkanal, wobei die Zusatzgaszufuhr in diesen zentralen Zuführkanal mündet. Dieser zentrale Zuführkanal betrifft insbesondere einen Zuführkanal, in dem das Brenngasgemisch zum Zeitpunkt des Zündvorgangs in einem explosionsfähigen Zustand vorliegt, also beispielsweise in einem Abschnitt zwischen einer Mischeinheit und dem Brennraum. Bei dieser Ausgestaltung ist weiterhin bevorzugt, dass dieser zentrale Zuführkanal zumindest teilweise auch den Zündkanal bildet, so dass die Zündmittel insbesondere in diesem zentralen Zuführkanal angeordnet sind. Dabei mündet die Zusatzgaszufuhr bevorzugt in einen Abschnitt des zentralen Zuführkanals zwischen der Zündeinrichtung und dem Mischraum.

Außerdem wird auch vorgeschlagen, dass die Zündeinrichtung mindestens eine Fördereinrichtung für das Zusatzgas und ein Sperrventil umfasst. Damit wird insbesondere die Möglichkeit geschaffen, die Zuführeinrichtung beispielsweise nur in einem Störfall zuzuschalten, das heißt bei einer erfolgten Zündung kann das Abgas auch ohne Aktivierung der Zusatzgaszufuhr beispielsweise über das Zentralventil schnell abgelassen werden. Die Fördereinrichtung ist dabei so gestaltet, dass diese das Zusatzgas auch bei den eingangs beschriebenen Überdrücken in der Entgratungskammer zuführen können, also insbesondere einen Förderdruck bereitstellen, der oberhalb des Überdrucks im Brennraum liegt.

Schließlich wird auch als vorteilhaft bezüglich der Vorrichtung zum thermischen Entgraten von Werkstücken erachtet, dass für wenigstens die Entgratungskammer oder die Zuführeinrichtung ein Zentralventil vorgesehen ist, über dass das Brenngasgemisch aus der Entgratungskammer oder der Zuführeinrichtung entfernt werden kann, wobei das Zentralventil mit einer Kühleinrichtung ausgeführt ist. Die Bereitstellung einer solchen Kühleinrichtung hat Einfluss auf die Temperaturentwicklung des Zentralventils beim schnellen Ausströmen des Brenngasgemischs so dass mit einer entsprechenden Kühleinrichtung die Gefahr der Selbstentzündung weiter reduziert werden kann. Zwar können einfache Konvektionskühleinrichtungen in einigen Fällen ausreichen, eine Kühleinrichtung mit einem Wärmeaustauschfluid wird aber vorgezogen. Am höchsten ist die Sicherheit natürlich, wenn überhaupt kein zündfähiges Gemisch vorhanden ist, da dann selbst das Vorhandensein einer Zündquellen nicht schadet. Bevorzugt wird daher die Temperatur der Entgratungskammer und ihrer Inertisierungsvolumina auf maximal 100° C ausgelegt.

Gemäß einem weiteren Aspekt der Erfindung wird ein Verfahren zum Entfernen eines explosiven Brenngasgemischs aus einer Vorrichtung zum thermischen Entgraten vorgeschlagen, das zumindest folgende Schritte umfasst:
- Zufuhr eines Brenngasgemischs in eine Vorrichtung zum thermischen Entgraten und
- Entfernen zumindest eines Teils des Brenngasgemischs, das vor dem Ausströmen aus der Vorrichtung zumindest teilweise mit einem Zusatzgas kontaktiert und zumindest teilweise inertisiert wird.

Dieses Verfahren kann insbesondere mit der hier erfindungsgemäß beschriebenen Vorrichtung durchgeführt werden.

Insoweit wird hier insbesondere ein Verfahren beschrieben, bei dem es aufgrund eines Störfalls oder einer Fehlzündung erforderlich ist, das im Brennraum noch befindliche explosive Brenngasgemisch zu entfernen. Um hierbei hohe Ausströmgeschwindigkeiten realisieren zu können und damit die Stillstandzeit der Vorrichtung zum thermischen Entgraten gering zu halten, wird zumindest der Teil des Brenngasgemischs, der die Entgratungskammer verlässt, mit einem Zusatzgas kontaktiert. Des Weiteren können auch alle anderen kritischen, kleinen Strömungsquerschnitte (z.B. mit einem Durchmesser kleiner als 2 cm) entsprechend inertisiert werden. Dabei wird das Zusatzgas vorteilhafterweise so zugeführt, dass das Brenngasgemisch gleichmäßig mit dem Zusatzgas durchmischt ist und/oder dass beispielsweise das Zusatzgas nach Art eines Mantelstrahls das ausströmende Brenngasgemisch umschließt. Insoweit kann eine zentrische und/oder eine in Umfangsrichtung verteilte Einspeisung des Zusatzgases zum Brenngasgemisch erfolgen.

Bei dem hier beschriebenen Verfahren werden bevorzugt Stickstoff und/oder Kohlendioxid als Zusatzgas zu dem Brenngasgemisch zugeführt. Grundsätzlich sind eine Reihe weiterer Zusatzgase auch geeignet, wie z. B. Wasserdampf. Es kann auch genügen, das Gasgemisch außerhalb des zündfähigen Bereiches zu bringen. Dies kann sogar durch Sauerstoffzugabe bis zum Unterschreiten einer unteren Explosionsgrenze durch Verdünnen oder durch Zugabe von Brenngas, also durch Sättigen bis zum Überschreiten einer oberen Explosionsgrenze erfolgen. So können Sauerstoff oder Brenngas auch als Zusatzgase im Sinne der vorliegenden Erfindung wirken. Wenn beim Ausströmen allerdings Sauerstoff der Umgebung hinzukommt, ist Sättigen mit Brennstoff nicht unbedingt sinnvoll, da das Gemisch beim Ausströmen wieder in den zündfähigen Bereich kommen kann. Bevorzugt wird daher eine Inertisierung mit Stickstoff und/oder Kohlendioxid, die bewirkt, dass die Gasmischung nicht mehr explosiv ist und deshalb eine potentielle Zündquelle keine Explosion hervorrufen kann. Folgende Grenzen gelten :

| Brenngas : | Stickstoff | Kohlendioxid |
|---|---|---|
| Methan | 11 | 5 |
| Wasserstoff | 17 | 12 |

Die in der Tabelle angegebenen Werte gelten für die vollständige Inertisierung, der angegebene Zahlenwert ist der Mindestwert für das Verhältnis der Molanteile von Zusatzgas zu den Molanteilen Brenngas. Vorteilhafterweise wird das Zusatzgas mit einer Temperatur von etwa 20 °C zugeführt.

Gemäß einer Weiterbildung des Verfahrens liegt das Brenngasgemisch zu Beginn des Entfernens mit einem Beladedruck in der Entgratungskammer vor, wobei das Zusatzgas mit einem Zuführdruck eingeleitet wird, der soviel größer als der Beladedruck ist, dass eine schnelle Zufuhr von Zusatzgas möglich ist. Grundsätzlich ist möglich, den Zuführdruck konstant zu halten, gleichwohl kann aber auch eine Anpassung des Zuführdrucks an den im Laufe des Entfernens des Brenngasgemischs sinkenden Beladedruck erfolgen.

Darüber hinaus wird als vorteilhaft angesehen, dass das Entfernen des Brenngasgemisches über ein Zentralventil erfolgt. Die Erfindung wird nachfolgend unter Bezugnahme auf die beigefügten Figuren weiter erläutert. Es ist darauf hinzuweisen, dass die Figuren besonders bevorzugte Ausführungsvarianten der Erfindung zeigen, diese jedoch nicht darauf begrenzt ist. Es zeigen schematisch:
Fig. 1: eine erste Ausführungsvariante der erfindungsgemäßen Vorrichtung, und
Fig. 2: eine weitere Ausführungsvariante der erfindungsgemäßen Vorrichtung.

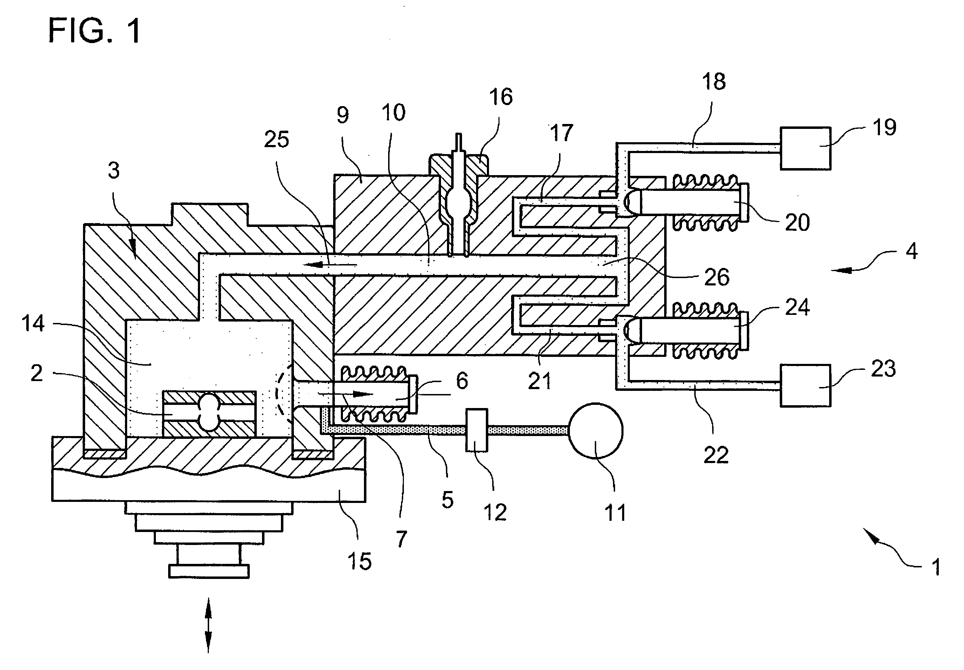

Fig. 1 zeigt eine vereinfachte Darstellung einer Vorrichtung 1 zum thermischen Entgraten von Werkstücken 2. Die veranschaulichte Vorrichtung 1 ist im wesentlichen in zwei Teilbereiche zu unterteilen, nämlich einmal eine Entgratungskammer 3, die im linken Bereich der Figur 1 dargestellt ist, und eine Zuführeinrichtung 4 zum Einleiten eines Brenngasgemischs in die Entgratungskammer 3, die in der rechten Hälfte der Figur 1 gezeigt ist.

Bei dieser Vorrichtung 1 bildet die Entgratungskammer 3 zusammen mit einem Schließteller 15 einen Brennraum 14, in dem das Werkstück 2 zur Bearbeitung positioniert wird. Zum Be- und Entladen der Entgratungskammer 3 mit dem Werkstück 2, ist der Schließteller 15 vertikal beweglich, wie mit dem Doppelpfeil darunter angedeutet. Der Brennraum 14 ist nun mit einem Zuführkanal für das Brenngasgemisch ausgestattet. Der Zuführkanal grenzt direkt an die direkt benachbart angeordnete Zuführeinrichtung 4 an. In dem dargestellten Fall ist die Zuführeinrichtung 4 mit einem Mischblock 9 gebildet, der direkt an der Entgratungskammer 3 positioniert ist. Dabei ist der Mischblock 9 gegenüber der Entgratungskammer 3 so ausgerichtet, dass ein durchgängiger zentraler Zuführkanal 10 gebildet ist. In diesen zentralen Zuführkanal 10 münden innerhalb des Mischblocks 9 eine Brenngasbohrung 17 und eine Sauerstoffgasbohrung 21, so dass ein Mischraum 26 am Ende des zentralen Zuführkanals 10 gebildet ist.

Das Einleiten von Brenngas erfolgt dabei in der Weise, dass das Brenngas aus einem Brenngasreservoir 19 entnommen und über eine Brenngasleitung 18 hin zu einer Brenngasbefüllungseinheit 20 transportiert wird. In entsprechender Weise wird auch die Bereitstellung des Sauerstoffs für das Brenngasgemisch bewerkstelligt. So wird der Sauerstoff aus einem Sauerstoffgasreservoir 23 über eine Sauerstoffgasleitung 22 einer Sauerstoffgasbefüllungseinheit 24 zugeführt. Die Brenngasbefüllungseinheit 20 und die Sauerstoffgasbefüllungseinheit 24 stellen nun die gewünschten Mengen und gegebenenfalls Drücke bereit, so dass das gewünschte Brenngas-Sauerstoffgas-Gemisch in Einströmungsrichtung 25 durch den zentralen Zuführkanal 10 in den Brennraum 14 eingeleitet werden kann.

Bei der hier veranschaulichten Ausführungsvariante ist eine Zündkerze 16 im zentralen Zuführkanal 10 positioniert, so dass dort normalerweise die Zündung des Brenngasgemisches erfolgt, so dass sich die Flammenfront durch den Zuführkanal 10 bis hin zum Brennraum 14 und damit hin zum Werkstück 2 fortpflanzt.

Die Entgratungskammer 3 ist zudem mit einem Zentralventil 6 ausgestattet, über das das Brenngasgemisch beispielsweise bei einer Fehlzündung aus der Entgratungskammer 3 bzw. den Brennraum 14 schnell entfernt werden kann. Dazu strömt nach Öffnen des Zentralventils 6 das Brenngasgemisch in Ausströmungsrichtung 7. Um hier besonders hohe Strömungsgeschwindigkeiten beim Ablassen des im Brennraum 14 befindlichen, explosiven Brenngasgemischs zu ermöglichen, ist zwischen dem Brennraum 14 und dem Zentralventil 6 eine Zusatzgaszufuhr 5 vorgesehen. Hier umfasst die Zusatzgaszufuhr 5 eine Fördereinrichtung 11 sowie ein Sperrventil 12, die das Betreiben der Zusatzgaszufuhr 5 beeinflussen. Für den Fall, dass eine Aktivierung der Zusatzgaszufuhr 5 z.B. durch eine zugeordnete Steuereinheit erfolgt ist, wird das Sperrventil 12 geöffnet und das Zusatzgas mit der Fördereinrichtung 11 in die Entgratungskammer 3 eingeleitet, wobei dies vorteilhafterweise in unmittelbarer Umgebung der Auslassbohrung der Entgratungskammer 3 erfolgt. Damit wird zumindest das Teilvolumen des Brenngasgemisches, das in Ausströmungsrichtung 7 austritt, inertisiert, so dass eine Selbstentzündung aufgrund der Gasreibung beim Durchströmen dieser Auslassbohrung bzw. des Zentralventils 6 vermieden wird.

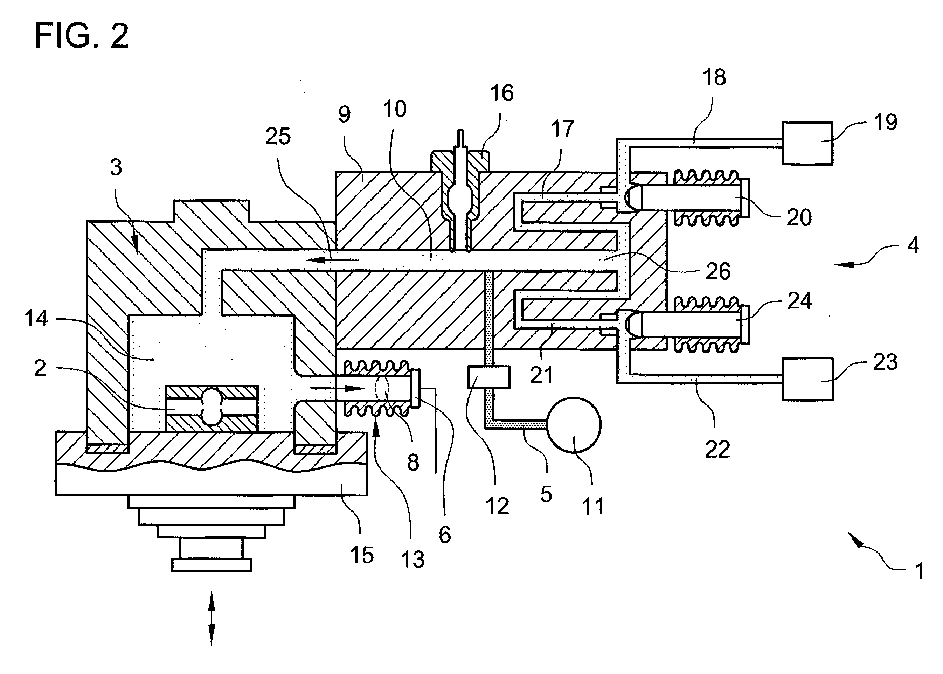

Fig. 2 zeigt eine weitere Ausführungsvariante der Vorrichtung 1 zum thermischen Entgraten von Werkstücken 2. Der Aufbau ähnelt dem der Vorrichtung aus Fig. 1, so dass insbesondere im Hinblick auf die Ausgestaltung der Entgratungskammer 3 und der Zuführeinrichtung 4 insoweit Bezug genommen wird. Dabei ist darauf hinzuweisen, dass für gleiche Bauteile dieselben Bezugszeichen angegeben wurden.

Auch diese Entgratungskammer 3 weist ein Zentralventil 6 auf, über das das Brenngasgemisch aus der Entgratungskammer 3 entfernt werden kann. Um hierbei in möglichst kurzer Zeit einen beachtlichen Anteil des Brenngasgemischs ausströmen lassen zu können, ist dabei das Zentralventil 6 mit einem Strömungsquerschnitt 8 ausgeführt, der bevorzugt größer als 5 mm² ist. Zusätzlich ist das Zentralventil 6 mit einer Kühleinrichtung 13 ausgeführt.

Im Gegensatz zu Fig. 1 ist bei dieser Ausführungsvariante die Zusatzgaszufuhr 5 mit der Zuführeinrichtung 4 verbunden. Die Zusatzgaszufuhr 5 mündet dabei in den zentralen Zuführkanal 10 und zwar in einem Bereich, zwischen der Zündkerze 16 und den Enden der Brenngasbohrung 17 bzw. der Sauerstoffgasbohrung 21 bzw. dem Mischraum 26. Auch diese Zusatzgaszufuhr 5 weist wiederum ein Sperrventil 12 und einen geeignete Fördereinrichtung 11 für das Zusatzgas auf. Bei einer solchen Anordnung der Zusatzgaszufuhr 5 wird nach Feststellen eines Störfalles bzw. bei Aktivierung der Zusatzgaszufuhr 5 das Zusatzgas zunächst in den Zuführkanal 10 eingeleitet, wobei dies mit einem solchen Druck stattfindet, dass sich das Zusatzgas bis hin in den Brennraum 14 ausbreitet und somit zu einer gesamten Inertisierung des Brenngasgemischs führt. Erst nach einer ausreichenden Inertisierung wird das Zentralventil 6 geöffnet. Eine solche Vorrichtung ist insbesondere dann geeignet, wenn mit geringen Ladedrücken für das thermische Entgraten gearbeitet wird. Die Druckerhöhung infolge der Zufuhr des Zusatzgases führt auch dazu, dass das Brenngasgemisch-Zusatzgas-Gemisch schneller über das Zentralventil 6 ausströmen kann.

Mit der hier beschriebenen Erfindung ist es möglich, dass, bevor die Entgratungskammer geöffnet wird, ein Zusatzgas (z. B. Stickstoff) dem Brenngasgemisch zugeführt wird (z. B. über ein Zentralventil im Mischblock), bis die Zündfähigkeit des Brenngasgemisches nicht mehr gegeben ist. Sobald dieser Zustand erreicht ist, kann über ein Zentralventil mit dem größtmöglichen Querschnitt entlüftet werden. Darüber hinaus ist auch möglich, die Stelle, bei der mit einer erhöhten Gasreibung zu rechnen ist, partiell zu inertisieren. Somit kann beispielsweise die Ausströmkante am Zentralventil alternativ oder zusätzlich inertisiert werden, um hier keine explosionsfähige Atmosphäre zu gestatten. Damit kann eine besonders schnelle Beseitigung des explosionsfähigen Brenngasgemischs aus der Entgratungskammer verwirklicht werden, so dass die Vorrichtung zum thermischen Entgraten binnen eines kurzen Zeitraums wieder einsatzfähig ist.

### Bezugszeichenliste

- 1: Vorrichtung
- 2: Werkstück
- 3: Entgratungskammer
- 4: Zuführeinrichtung
- 5: Zusatzgaszufuhr
- 6: Zentralventil
- 7: Ausströmungsrichtung
- 8: Strömungsquerschnitt
- 9: Mischblock
- 10: Zuführkanal
- 11: Fördereinrichtung
- 12: Sperrventil
- 13: Kühleinrichtung
- 14: Brennraum
- 15: Schließteller
- 16: Zündkerze
- 17: Brenngasbohrung
- 18: Brenngasleitung
- 19: Brenngasreservoir
- 20: Brenngasbefüllungseinheit
- 21: Sauerstoffgasbohrung
- 22: Sauerstoffgasleitung
- 23: Sauerstoffgasreservoir
- 24: Sauerstoffgasbefüllungseinheit
- 25: Einströmungsrichtung
- 26: Mischraum

## Patentansprüche

1. Vorrichtung (1) zum thermischen Entgraten von Werkstücken (2) umfassend wenigstens eine Entgratungskammer (3) und eine Zuführeinrichtung (4) zum Einleiten eines Brenngasgemisches in die Entgratungskammer (3), **dadurch gekennzeichnet, dass** für wenigstens die Entgratungskammer (3) oder die Zuführeinrichtung (4) eine Zusatzgaszufuhr (5) vorgesehen ist, so dass das zumindest in der Entgratungskammer (3) oder der Zuführeinrichtung (4) befindliche Brenngasgemisch mit Zusatzgas wenigstens teilweise mischbar und zumindest teilweise inertisierbar ist.

2. Vorrichtung (1) nach Patentanspruch 1, bei dem für wenigstens die Entgratungskammer (3) oder die Zuführeinrichtung (4) ein Zentralventil (6) vorgesehen ist, über das das Brenngasgemisch aus der Entgratungskammer (3) oder der Zuführeinrichtung (4) entfernt werden kann, wobei die Zusatzgaszufuhr (5), in eine Ausströmungsrichtung (7) des Brenngasgemisches gesehen, vor dem Zentralventil (6) angeordnet ist.

3. Vorrichtung (1) nach Patentanspruch 1 oder 2, bei dem für wenigstens die Entgratungskammer (3) oder die Zuführeinrichtung (4) ein Zentralventil (6) vorgesehen ist, über das das Brenngasgemisch aus der Entgratungskammer (3) oder der Zuführeinrichtung (4) entfernt werden kann, wobei das Zentralventil (6) einen Strömungsquerschnitt (8) hat, der größer als 2 mm², vorzugsweise größer als 10 mm² ist.

4. Vorrichtung (1) nach einem der vorhergehenden Patentansprüche, bei dem die Zuführeinrichtung (4) einen Mischblock (9) mit einem zentralen Zuführkanal (10) aufweist, wobei die Zusatzgaszufuhr (5) in diesen zentralen Zuführkanal (10) mündet.

5. Vorrichtung (1) nach einem der vorhergehenden Patentansprüche, bei dem die Zuführeinrichtung (4) mindestens eine Fördereinrichtung (11) für das Zusatzgas und ein Sperrventil (12) umfasst.

6. Vorrichtung (1) nach einem der vorhergehenden Patentansprüche, bei dem für wenigstens die Entgratungskammer (3) oder die Zuführeinrichtung (4) ein Zentralventil (6) vorgesehen ist, über das das Brenngasgemisch aus der Entgratungskammer (3) oder der Zuführeinrichtung (4) entfernt werden kann, wobei das Zentralventil (6) mit einer Kühleinrichtung (13) ausgeführt ist.

7. Verfahren zum Entfernen eines explosiven Brenngasgemisches aus einer Vorrichtung (1) zum thermischen Entgraten umfassend:
- Zufuhr eines Brenngasgemisches in eine Vorrichtung (1) zum thermischen Entgraten und
- Entfernen zumindest eines Teils des Brenngasgemisches, **dadurch gekennzeichnet, dass** das Brenngemisch vor dem Ausströmen aus der Vorrichtung (1) zumindest teilweise mit einem Zusatzgas kontaktiert und zumindest teilweise inertisiert wird.

8. Verfahren nach Patentanspruch 7, bei dem als Zusatzgas Stickstoff und/oder Kohlendioxid zu dem Brenngasgemisch zugeführt wird.

9. Verfahren nach Patentanspruch 7 oder 8, bei dem das Brenngasgemisch zu Beginn des Entfernens mit einem Beladedruck in einer Entgratungskammer (3) vorliegt, wobei das Zusatzgas mit einem Zuführdruck eingeleitet wird, der größer als der Beladedruck ist.

10. Verfahren nach einem der Patentansprüche 7 bis 9, bei dem das Entfernen des Brenngasgemisches über ein Zentralventil (6) erfolgt, wobei der abgeführte Volumenstrom ein Molverhältnis von Zusatzgas zu Brenngas außerhalb der Explosionsgrenzen hat.

## Claims

1. Apparatus (1) for thermal deburring of work pieces (2) comprising at least one deburring chamber (3) and a feeding device (4) for feeding a combustion gas mixture in the combustion chamber (3), **characterised in that** an additional gas feeding (5) is provided for at least the deburring chamber (3) or the feeding device (4), such that at least the combustion gas mixture in the deburring chamber (3) or the feeding device (4) is at least partially mixable with additional gas and at least partially inertible.

2. Apparatus (1) according to claim 1, wherein a central valve (6) is provided for at least the deburring chamber (3) or the feeding device (4), through which the combustion gas mixture can be removed from the combustion chamber (3) or the feeding device (4), wherein the additional gas feeding (5) is arranged, in a stream out direction (7), before the central valve (6).

3. Apparatus (1) according to claim 1 or 2, wherein a central valve (6) is provided at least for the deburring chamber (3) or the feeding device (4), through which the combustion gas mixture can be removed from the combustion chamber (3) or the feeding device (4), wherein the central valve (6) has a fluid flow cross section (8) which is bigger than 2 mm², preferable bigger than 10 mm².

4. Apparatus (1) according to one of the preceding claims, wherein the feeding device (4) comprises a mixing block (9) with a central feeding channel (10), wherein the additional gas feeding (5) ends in that central feeding channel (10).

5. Apparatus (1) according to one of the preceding claims, wherein a feeding device (4) comprises at least one conveying device (11) for the additional gas and a blocking valve (12).

6. Apparatus (1) according to one of the preceding claims, wherein a central valve (6) is provided at least for the deburring chamber (3) or the feeding device (4), through which the combustion gas mixture can be removed from the deburring chamber (3) or the feeding device (4), wherein the central valve (6) comprises a cooling device (13).

7. Method for removing an explosive combustion gas mixture from an apparatus (1) for thermal deburring, comprising:
- feeding a combustion mixture in an apparatus (1) for thermal deburring and
- removing at least a part of the combustion gas mixture, **characterised in that** the combustion gas mixture is at least partially contacted with an additional gas and at least partially inerted before the combustion gas mixture streams out the apparatus.

8. Method according to claim 7, wherein nitrogen and/or carbon dioxide as an additional gas is fed to the combustion gas mixture.

9. Method according to claim 7 or 8, wherein the combustion gas mixture in a deburring chamber (3) has a loading pressure before the removing, wherein the additional gas is fed with a feeding pressure, which is bigger than the loading pressure.

10. Method according to one of the claims 7 to 9, wherein the combustion gas mixture is removed through a central valve (6), wherein the removed volumetric flow rate has a mol ratio between additional gas and combustion gas which is outside of the explosion limits.

## Revendications

1. Dispositif d'ébarbage thermique (1) de pièces à usiner (2), comprenant au moins une chambre d'ébarbage (3) et un dispositif d'alimentation (4) pour déverser un mélange de gaz combustible dans la chambre d'ébarbage (3), **caractérisé en ce que** pour au moins la chambre d'ébarbage (3) ou pour le dispositif d'alimentation (4), une alimentation supplémentaire (5) en gaz est prévue, de sorte que le mélange de gaz combustible se trouvant au moins dans la chambre d'ébarbage (3) ou dans le dispositif d'alimentation (4) peut être mélangé au moins partiellement avec du gaz supplémentaire et peut être soumis au moins partiellement à une inertisation.

2. Dispositif (1) selon la revendication 1, dans le cas duquel pour au moins la chambre d'ébarbage (3) ou pour le dispositif d'alimentation (4) une valve centrale (6) est prévue, à l'intermédiaire de laquelle le mélange de gaz combustible peut être éliminé de la chambre d'ébarbage (3) ou du dispositif d'alimentation (4), dans quel cas, vu dans un sens d'écoulement (7) du mélange de gaz combustible, l'alimentation supplémentaire (5) en gaz est agencée en amont de la valve centrale (6).

3. Dispositif (1) selon la revendication 1 ou 2, dans le cas duquel pour au moins la chambre d'ébarbage (3) ou pour le dispositif d'alimentation (4) une valve centrale (6) est prévue, à l'intermédiaire de laquelle le mélange de gaz combustible peut être éliminé de la chambre d'ébarbage (3) ou du dispositif d'alimentation (4), la valve centrale (6) ayant une section de passage (8) qui est plus élevée que 2 mm², de préférence plus élevée que 10 mm²_{.}

4. Dispositif (1) selon l'une des revendications précédentes, dans le cas duquel le dispositif d'alimentation (4) dispose d'un bloc de mélange (9) avec un canal d'alimentation central (10), l'alimentation supplémentaire en gaz (5) débouchant dans ce canal d'alimentation central (10).

5. Dispositif (1) selon l'une des revendications précédentes, dans le cas duquel le dispositif d'alimentation (4) comprend au moins un dispositif convoyeur (11) pour le gaz supplémentaire et une valve d'arrêt (12).

6. Dispositif (1) selon l'une des revendications précédentes, dans le cas duquel au moins pour la chambre d'ébarbage (3) ou pour le dispositif d'alimentation (4) une valve centrale (6) est prévue, à l'intermédiaire de laquelle le mélange de gaz combustible peut être éliminé de la chambre d'ébarbage (3) ou du dispositif d'alimentation (4), la valve centrale (6) étant réalisée avec un dispositif de refroidissement (13).

7. Procédé destiné à éliminer un mélange de gaz combustible explosif d'un dispositif (1) pour l'ébarbage thermique, comprenant :
- alimenter un mélange de gaz combustible dans un dispositif (1) d'ébarbage thermique et
- éliminer au moins une partie du mélange de gaz combustible, **caractérisé en ce qu'**avant de s'écouler hors du dispositif (1), le mélange combustible contacte au moins partiellement un gaz supplémentaire et est inertisé au moins partiellement.

8. Procédé selon la revendication 7, dans le cas duquel on alimente comme gaz supplémentaire de l'azote et/ou du dioxyde de carbone dans le mélange de gaz combustible.

9. Procédé selon la revendication 7 ou 8, dans le cas duquel le mélange de gaz combustible existe avec une pression d'admission dans une chambre d'ébarbage (3), le gaz supplémentaire étant déversé avec une pression d'alimentation qui est plus élevée que la pression d'admission.

10. Procédé selon l'une des revendications 7 à 9, dans le cas duquel l'élimination du mélange de gaz combustible est effectuée par une valve centrale (6), le flux de volume évacué ayant un rapport molaire de gaz supplémentaire par rapport au gaz combustible qui est situé à l'extérieur des limites d'explosion
